# EUROPÄISCHE PATENTANMELDUNG

(11) **EP 2 700 790 A1**
(43) Veröffentlichungstag der Anmeldung: **26.02.2014**
(21) Anmeldenummer: 12181145.9
(22) Anmeldetag: 21.08.2012
(51) Int. Cl.: F01K 17/02, F01K 23/10, F01K 23/16

(54) **Kraftwerksanlage umfassend eine Gasturbine, einen Generator und eine Dampfturbine sowie Verfahren zum Betrieb derselben**

(71) Anmelder: Siemens Aktiengesellschaft, 80333 München (DE)
(72) Erfinder: Heine, Werner-Holger, 46487 Wesel (DE); Brück, Stefan, 45470 Mülheim an der Ruhr (DE); Ehehalt, Ulrich, 45147 Essen (DE)

(57) **Zusammenfassung**

Die Erfindung betrifft eine Kraftwerksanlage (1), die als Einwellenanlage ausgeführt ist und zusätzlich zu einer ersten Kupplung (19) eine zweite Kupplung (20) aufweist, mit der die Niederdruck-Teilturbine (11) abgeschaltet werden kann.

## Beschreibung

Die Erfindung betrifft eine Kraftwerksanlage umfassend eine Gasturbine, einen Generator und eine Dampfturbine, umfassend eine Hochdruck-Teilturbine, eine Mitteldruck-Teilturbine und eine Niederdruck-Teilturbine, wobei die Gasturbine und die Dampfturbine an den Generator angekoppelt sind, weiter umfassend eine erste Kupplung, die zwischen dem Generator und der Hochdruck-Teilturbine angeordnet ist.

Des Weiteren betrifft die Erfindung ein Verfahren zum Betreiben einer Kraftwerksanlage.

Kraftwerksanlagen können im Wesentlichen zwei Funktionen erfüllen. Zum einen wird in Kraftwerksanlagen elektrische Energie erzeugt, die über elektrische Hochspannungsleitungen an elektrische Verbraucher übertragen wird. Des Weiteren wird in Kraftwerksanlagen Heizwärme produziert, die über geeignete Fernwärmeleitungen an Haushalte oder andere Verbraucher weitergeleitet wird. Daher erfüllen Kraftwerke im Wesentlichen zwei Funktionen. Die in den Kraftwerksanlagen eingesetzten Dampfturbinen müssen eine möglichst flexible Betriebsweise aufweisen. Naturgemäß wird in einer Kraftwerksanlage während des Sommers ein höherer Bedarf an der Erzeugung von elektrischer Energie als an der Erzeugung von Heizwärme berücksichtigt. Während des Betriebs im Winter ist es naturgemäß umgekehrt. Im Winter ist der Anteil an der Erzeugung von Fernwärme höher als im Sommer. Unter einer Dampfturbine ist eine Kombination von Teilturbinen zu verstehen, die üblicherweise in Hochdruck-, Mitteldruck- und Niederdruck-Teilturbinen eingeteilt werden. Geregelt werden solche Dampfturbinen durch eine entsprechende Entnahmestelle nach der Mitteldruck-Teilturbine bzw. in der Niederdruck-Teilturbine, wobei eine Klappe in einer Überströmleitung die Dampfmenge zur Niederdruck-Teilturbine regelt. Während des Betriebs im Winter wird diese Klappe derart geregelt, dass der Dampfmassenstrom zur Niederdruck-Teilturbine abnimmt. Dies führt dazu, dass einerseits weniger Leistung in der Niederdruck-Teilturbine produziert wird, andererseits aber mehr Dampfmassenstrom nach dem Mitteldruck-Turbinenaustritt entnommen werden kann. Es kann sogar vorkommen, was einen Extremfall darstellen würde, dass während des Betriebs im Winter die Niederdruck-Teilturbine sogar ganz abgeschaltet werden soll und die Hochdruck- bzw. Mitteldruck-Teilturbinen gewissermaßen im Alleinbetrieb (Stand alone) als so genannte Gegendruck-Turbinen betrieben werden.

Eine Abschaltung der Niederdruck-Teilturbine während eines Betriebes im Winter hat eine Auswirkung auf den Wirkungsgrad der Gesamt-Kraftwerksanlage, wobei dieser Wirkungsgrad verbessert ist, weil ansonsten lediglich zu Kühlzwecken der Turbinenbeschaufelung der Niederdruck-Teilturbine nur geringe Dampfmengen durch die Niederdruck-Teilturbine geleitet werden müssten. Diese geringen Dampfmengen führen dazu, dass die Niederdruck-Teilturbine nur gering durchströmt wird und dieses mit entsprechend hohen Verlusten verbunden ist.

Mit der Erfindung wird eine verbesserte Kraftwerksanlage angeboten, die einen verbesserten Betrieb aufweist.

Gelöst wird diese Aufgabe durch eine Kraftwerksanlage gemäß Anspruch 1 und einem Verfahren gemäß Anspruch 6.

Erfindungsgemäß wird somit eine Kraftwerksanlage umfassend eine Gasturbine, einen Generator und eine Dampfturbine vorgeschlagen, wobei die Dampfturbine eine Hochdruck-Teilturbine, eine Mitteldruck-Teilturbine und eine Niederdruck-Teilturbine aufweist, wobei die Gasturbine und die Dampfturbine an den Generator angekoppelt sind, weiter umfassend eine erste Kupplung, die zwischen dem Generator und der Hochdruck-Teilturbine angeordnet ist, eine zweite Kupplung, die zwischen der Mitteldruck-Teilturbine und der Niederdruck-Teilturbine angeordnet ist.

Somit wird erfindungsgemäß vorgeschlagen, in einer Einwellenanlage, d.h. der Generator, die Gasturbine und die Dampfturbine sind über eine gemeinsame Welle drehmomentübertragend miteinander verbunden, eine zweite Kupplung eingesetzt wird, die zwischen der Mitteldruck-Teilturbine und der Niederdruck-Teilturbine angeordnet ist. Somit kann über die zweite Kupplung die Niederdruck-Teilturbine abgeschaltet werden, in der Form, dass ein Drehmoment des Rotors der Niederdruck-Teilturbine nicht mehr mit der restlichen Rotoranordnung der Gasturbine des Generators und der Hochdruck- bzw. Mitteldruck-Teilturbine gekoppelt ist.

Üblicherweise wird zwischen dem Generator und der Hochdruck-Teilturbine eine erste Kupplung eingesetzt. Erfindungsgemäß wird nunmehr vorgeschlagen, den Anlagenwirkungsgrad im Winterbetrieb durch Abschalten der Niederdruck-Teilturbine dadurch zu erhöhen, dass eine zweite Kupplung zwischen der Mitteldruck-Teilturbine und der Niederdruck-Teilturbine angeordnet ist.

Vorteilhafte Weiterbildungen sind in den Unteransprüchen angegeben.

So sind in einer ersten vorteilhaften Weiterbildung die erste Kupplung und die zweite Kupplung als schaltbare Kupplung ausgebildet. Somit ist die Betriebsweise der Kraftwerksanlage einfach und flexibel.

In einer weiteren vorteilhaften Weiterbildung ist die Kraftwerksanlage als Einwellenanlage ausgebildet. Das bedeutet, dass die Gasturbine, die einen Rotor aufweist und der Generator, der ebenfalls einen Rotor aufweist, über eine gemeinsame Welle verbunden sind. Darüber hinaus ist ebenfalls die Dampfturbine, die auch einen Rotor aufweist, über die gleiche Welle drehmomentübertragend miteinander verbunden. Erfindungsgemäß wird die Kraftwerksanlage über eine gemeinsame einzelne Welle drehmomentübertragend ausgebildet.

In einer weiteren vorteilhaften Weiterbildung ist ein Zwischenüberhitzer vorgesehen, der zum Erhitzen eines aus der Hochdruck-Teilturbine ausströmenden Dampfes ausgebildet ist. Somit wird der Wirkungsgrad der Kraftwerksanlage dadurch erhöht, dass der aus der Hochdruck-Teilturbine ausströmende Dampf in einem Zwischenüberhitzer wieder auf eine höhere Temperatur gebracht wird und anschließend in die Mitteldruck-Teilturbine strömt.

In einer weiteren vorteilhaften Weiterbildung ist eine Abschaltvorrichtung zum Abschalten der Niederdruck-Teilturbine vorgesehen. Solch eine Abschaltvorrichtung muss an die Bedingungen optimal angepasst werden.

Die Erfindung wird nun anhand eines Ausführungsbeispieles näher erläutert.

Es zeigt:

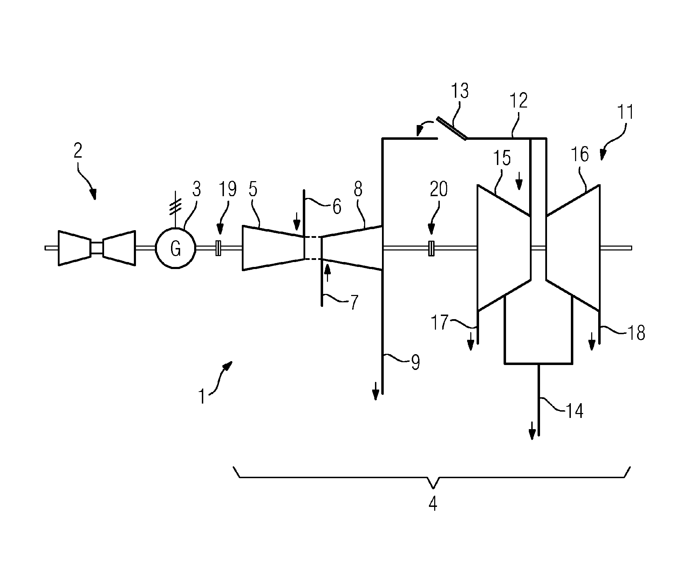

- Figur 1: eine schematische Darstellung einer Kraftwerksanlage.

Die Figur 1 zeigt eine schematische Darstellung einer Kraftwerksanlage 1 umfassend eine Gasturbine 2, die drehmomentübertragend über eine Welle mit einem elektrischen Generator 3 drehmomentübertragend verbunden ist. In der in der Fig. 1 dargestellten Kraftwerksanlage 1 ist der elektrische Generator 3 rechts von der Gasturbine 2 angeordnet. Auf der rechten Seite des elektrischen Generators 3 ist eine Dampfturbine 4 angeordnet. Die Dampfturbine 4 weist eine Hochdruck-Teilturbine 5 auf, die über eine Frischdampfleitung 6 mit Frischdampf versorgt wird. Der aus der Hochdruck-Teilturbine 5 ausströmende Dampf wird in einem Zwischenüberhitzer (nicht dargestellt) erhitzt und über eine heiße Zwischenüberhitzerleitung 7 in eine Mitteldruck-Teilturbine 8 geleitet. Der aus der Mitteldruck-Teilturbine 8 ausströmende Dampf wird zweigeteilt. Zum einen wird über eine erste Entnahmestelle 9 ein Dampf entnommen. Über eine Mitteldruck-Abdampfleitung 10 wird ein zweiter Teil des aus der Mitteldruck-Teilturbine 8 ausströmenden Dampfes zu einer Niederdruck-Teilturbine 11 geführt.

Der in die Niederdruck-Teilturbine 11 strömende Dampf wird über eine Überströmleitung 12 geführt, wobei in dieser Überströmleitung 12 eine Klappe 13 angeordnet ist. Mit der Klappe 13 kann die Durchflussmenge durch die Überströmleitung 12 gesteuert werden und in einem extremen Fall sogar gestoppt werden.

Die Niederdruck-Teilturbine 11 ist derart ausgebildet, dass über eine zweite Entnahmestelle 14 ein Dampf aus der Dampfturbine 4 entnommen werden kann.

Die in der Figur dargestellte Niederdruck-Teilturbine 11 ist als eine zweiflutige Teilturbine mit einer ersten Flut 15 und einer zweiten Flut 16 ausgebildet. Die erste Flut 15 ist mit einer ersten Niederdruck-Abdampfleitung 17 ausgebildet. Die zweite Flut 16 ist mit einer zweiten Niederdruck-Abdampfleitung 18 ausgebildet.

Der aus der ersten Niederdruck-Abdampfleitung 17 und der zweiten Niederdruck-Abdampfleitung 18 ausströmende Dampf gelangt zu einem Kondensator (nicht dargestellt) und kondensiert dort wieder zu Wasser. Die Dampfturbine 4 ist mit einem Rotor ausgebildet, der mit einer Beschaufelung eine Umwandlung von thermischer Energie in mechanische Energie ermöglicht.

Die Hochdruck-Teilturbine 5 kann in einem einzelnen Gehäuse ausgebildet sein wie die Mitteldruck-Teilturbine 8. Es sind allerdings auch Ausführungsformen bekannt, bei der die Hochdruck-Teilturbine 5 und Mitteldruck-Teilturbine 8 in einem Gehäuse angeordnet sind. Es sind ebenso auch Ausführungsformen bekannt, bei denen die Mitteldruck-Teilturbine 8 und die Niederdruck-Teilturbine 11 in einem Gehäuse (nicht dargestellt) ausgebildet ist.

Zwischen dem elektrischen Generator 3 und der Hochdruck-Teilturbine 5 ist eine erste Kupplung 19 angeordnet. Mit der ersten Kupplung 19 wird eine Drehmomentübertragung der Dampfturbine 4 auf den Generator 3 unterbrochen. Die in der Figur dargestellte Kraftwerksanlage 1 ist eine so genannte Einwellenanlage. Das bedeutet, dass die Rotoren der Gasturbine 2, des elektrischen Generators 3 und der Dampfturbine 4 eine gemeinsame drehmomentübertragende Welle aufweisen. Die Kraftwerksanlage 1 ist derart ausgebildet, dass die Dampfturbine 4 eine zweite Kupplung 20 aufweist. Die zweite Kupplung 20 ist in der Figur zwischen der Mitteldruck-Teilturbine 8 und der Niederdruck-Teilturbine 11 angeordnet. Sofern die Kraftwerksanlage 1 mit einer Dampfturbine 4 ausgeführt wird, in der die Mitteldruck-Teilturbine 8 und die Niederdruck-Teilturbine 11 in einem Gehäuse ausgeführt ist, wird die Kupplung 20 zwischen der Hochdruck-Teilturbine 5 und der vorgenannten eingehäusigen Mitteldruck-Teilturbine 8 und der Niederdruck-Teilturbine 11 angeordnet.

Die erste Kupplung 19 und die zweite Kupplung 20 sind als schaltbare Kupplung ausgebildet, das bedeutet, dass eine Drehmomentübertragung mechanisch oder elektrisch zugeschaltet oder abgeschaltet werden kann.

Mit der in der Figur dargestellten Kraftwerksanlage 1 wird ein Betrieb ermöglicht, in dem die Niederdruck-Teilturbine 11 abgeschaltet werden kann.

## Patentansprüche

1. Kraftwerksanlage (1) umfassend
eine Gasturbine (2),
einen Generator (3) und
eine Dampfturbine (4) umfassend
eine Hochdruck-Teilturbine (5),
eine Mitteldruck-Teilturbine (8) und eine Niederdruck-Teilturbine (11),
wobei die Gasturbine (2) und die Dampfturbine (4) an den Generator (3) angekoppelt sind,
weiter umfassend eine erste Kupplung (19), die zwischen dem Generator (3) und der Hochdruck-Teilturbine (5) angeordnet ist,
**gekennzeichnet durch**
eine zweite Kupplung (20), die zwischen der Mitteldruck-Teilturbine (8) und der Niederdruck-Teilturbine (11) angeordnet ist.

2. Kraftwerksanlage (1) nach Anspruch 1,
wobei die erste Kupplung (19) und die zweite Kupplung (20) als schaltbare Kupplung ausgebildet sind.

3. Kraftwerksanlage (1) nach Anspruch 1 oder 2,
wobei die Kraftwerksanlage (1) als Einwellenanlage ausgebildet ist.

4. Kraftwerksanlage (1) nach einem der vorhergehenden Ansprüche,
umfassend einen Zwischenüberhitzer, der zum Erhitzen eines aus der Hochdruck-Teilturbine (5) ausströmenden Dampfes ausgebildet ist.

5. Kraftwerksanlage (1) nach einem der vorhergehenden Ansprüche,
mit einer Abschaltvorrichtung zum Abschalten der Niederdruck-Teilturbine (11).

6. Verfahren zum Betreiben einer Kraftwerksanlage (1) nach einem der Ansprüche 1 bis 5,
wobei die Niederdruck-Teilturbine (11) abgeschaltet wird.
